# EUROPEAN PATENT APPLICATION

(11) **EP 4 672 631 A1**
(43) Date of publication of application: **31.12.2025**
(21) Application number: 24783999.6
(22) Date of filing: 05.03.2024
(51) Int. Cl.: H04B 7/08

(54) **ANTENNA PANEL INDICATION METHOD AND APPARATUS**

(30) Priority: 07.04.2023 CN 202310417609
(71) Applicant: ZTE CORPORATION, Shenzhen, Guangdong 518057 (CN)
(72) Inventor: ZHANG, Chenchen, Shenzhen, Guangdong 518057 (CN); XUE, Fei, Shenzhen, Guangdong 518057 (CN); ZHOU, Wubin, Shenzhen, Guangdong 518057 (CN)
(74) Representative: Mozzi, Matteo
(86) International application number: PCT/CN2024/080184
(87) International publication number: WO 2024/207914

(57) **Abstract**

Provided are an antenna panel indication method and device. The method includes: receiving antenna panel indication information sent by a terminal; determining, according to the antenna panel indication information, correspondence between the terminal signal transmission and the antenna panel, the present invention can solve the problem in the related art of realizing simultaneous transmission of signals of a plurality of antenna panels, and a base station determines a correspondence between terminal signal transmission and an antenna panel by receiving antenna panel indication information reported by a terminal, the base station thus knows when and which signals or channels can be scheduled for the terminals to transmit simultaneously on multiple antenna panels, in this way, signal transmission may be scheduled concurrently for the terminals on the plurality of antenna panels.

## Description

### Cross-Reference to Related Application

This disclosure is based on Chinese Patent Application CN 2023104176098 filed on 07 April 2023 and entitled "Antenna panel indication method and device", and claims priority to this patent application, the disclosure of which is incorporated herein by reference in its entirety.

### Technical Field

Embodiments of the present disclosure relate to the field of communications, and in particular, to an antenna panel indication method and apparatus.

### Background

In the NR, in order to better apply a high frequency band to provide cell coverage, a signal is usually sent based on a beam forming technology, so as to resist large signal fading in the high frequency band. In order to implement a beam forming technology, no matter a transmitting end or a receiving end, very many antenna arrays need to be deployed on an antenna panel, so that flexible beam forming can be achieved. In order to achieve omnidirectional coverage, a transmitting end and a receiving end are provided with a plurality of antenna panels, and different antenna panels are used for covering different beam angle ranges.

With the continuous evolution of standards and product capabilities, signal receiving and signal sending of a terminal only supports that only one antenna panel is applied at the same time, and will evolve to that a plurality of antenna panels can be applied at the same time in the future. Especially in a multi-point transmission or multi-carrier deployment, a plurality of antenna panels are required to transmit signals simultaneously.

Aiming at the problem in the related art of how to simultaneously transmit signals via a plurality of antenna panels, no solution has been proposed.

### Summary

Embodiments of the present disclosure provide an antenna panel indication method and apparatus, so as to at least solve the problem in the related art that a plurality of antenna panels transmit signals simultaneously.

According to one embodiment of the present disclosure, provided is an antenna panel indication method, which is applied to a base station, the method includes:
receiving antenna panel indication information sent by a terminal;
determining correspondence between the terminal signal transmission and the antenna panel according to the antenna panel indication information.

According to another embodiment of the present disclosure, also provided is an antenna panel indication method, which is applied to a terminal, the method includes:
sending antenna panel indication information to a base station, wherein the antenna panel indication information is used for instructing the base station to determine correspondence between a terminal signal transmission and an antenna panel.

According to another embodiment of the present disclosure, also provided is an antenna panel indication device, which is applied to a base station, the device includes:
a receiving module, configured to receive antenna panel indication information sent by a terminal;
a determination module, configured to determine correspondence between terminal signal transmission and an antenna panel according to the antenna panel indication information.

According to another embodiment of the present disclosure, also provided is an antenna panel indication device, which is applied to a terminal, the device includes:
a sending module configured to send antenna panel indication information to a base station, wherein the antenna panel indication information is used for instructing the base station to determine a correspondence between a terminal signal transmission and an antenna panel.

According to another embodiment of the present disclosure, a computer-readable storage medium is further provided. The storage medium stores a computer program, wherein the computer program is configured to execute the steps in any one of the method embodiments when running.

According to another embodiment of the present disclosure, also provided is an electronic device, comprising a memory and a processor, wherein the memory stores a computer program, and the processor is configured to run the computer program so as to execute the steps in any one of the method embodiments.

According to embodiments of the present disclosure, antenna panel indication information sent by a terminal is received; determining correspondence between the terminal signal transmission and the antenna panel according to the antenna panel indication information, the present invention can solve the problem in the related art of realizing simultaneous transmission of signals of a plurality of antenna panels, and a base station determines a correspondence between terminal signal transmission and an antenna panel by receiving antenna panel indication information reported by a terminal, the base station thus knows when and which signals or channels can be scheduled for the terminals to transmit simultaneously on multiple antenna panels, in this way, signal transmission may be scheduled concurrently for the terminals on the plurality of antenna panels.

### Brief Description of the Drawings

Fig. 1 is a hardware structure block diagram of a computer device of an antenna panel indication method according to an embodiment of the present disclosure;
Fig. 2 is a first flowchart of an antenna panel indication method according to an embodiment of the present disclosure;
Fig. 3 is a second flowchart of an antenna panel indication method according to an embodiment of the present disclosure;
Fig. 4 is a schematic diagram of a terminal executing receiving beam training by using a plurality of antenna panels in sequence according to an embodiment of the present invention;
Fig. 5 is a schematic diagram of a terminal simultaneously executing training of an L3 measurement receiving beam and training of an L1 measurement receiving beam by using a plurality of antenna panels according to an embodiment;
Fig. 6 is a schematic diagram of a terminal simultaneously executing L3 receive beam training and L1 measurement by using a plurality of antenna panels according to an embodiment of the present invention;
Fig. 7 is a schematic diagram of a terminal simultaneously executing L3 measurement receive beam training and PDCCH/PDSCH reception with a plurality of antenna panels according to the present embodiment;
Fig. 8 is a schematic diagram of a terminal simultaneously executing L1 measurement receiving beam training and L1 measurement without beam training by using a plurality of antenna panels according to an embodiment;
Fig. 9 is a schematic diagram of a radar terminal simultaneously executing L1 measurement receive beam training and PDCCH/PDSCH reception with a plurality of antenna panels in accordance with the present invention;
Fig. 10 is a schematic diagram of a terminal simultaneously executing L1 measurement and PDCCH/PDSCH reception with a plurality of antenna panels according to the present embodiment;
Fig. 11 is a schematic diagram of a terminal simultaneously executing L1 measurement receiving beam polling and L3 measurement receiving beam polling using a plurality of antenna panels according to the present embodiment;
Fig. 12 is a schematic diagram of a terminal simultaneously executing L1 measurement with a plurality of antenna panels and receiving beam polling without receiving beam polling according to an embodiment;
Fig. 13 is a diagram of a terminal simultaneously executing L1 measurement reception beam polling and PDCCH/PDSCH reception with a plurality of antenna panels according to the present embodiment;
Fig. 14 is a first block diagram of an antenna panel indication apparatus according to an embodiment of the present disclosure;
Fig. 15 is a second block diagram of an antenna panel indication apparatus according to an embodiment of the present disclosure.

### Detailed Description of the Embodiments

Embodiments of the present disclosure will be described below in detail with reference to the accompanying drawings and in conjunction with embodiments.

It should be noted that, terms such as 'first' and 'second' in the description, claims, and accompanying drawings of the present disclosure are used to distinguish similar objects, but are not necessarily used to describe a specific sequence or order.

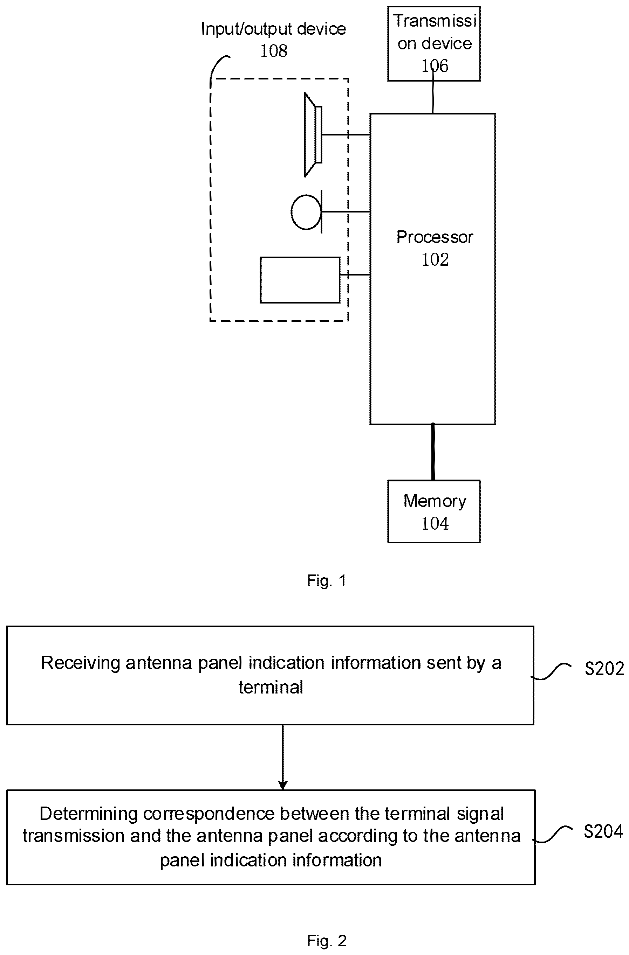

The method embodiments provided in the embodiments of the present disclosure can be executed in a computer device or a similar arithmetic apparatus. Taking the computer device running as an example, Fig. 1 is a hardware structure block diagram of a computer device of an antenna panel indication method according to an embodiment of the present disclosure, as shown in Fig. 1, the computer device may include one or more (only one is shown in Fig. 1) processors 102 (the processors 102 may include, but are not limited to, a processing apparatus such as a microprocessor MCU or a programmable logic device) and a memory 104 configured to store data, the computer device can further include a transmission device 106 and an input/output device 108 for a communication function. A person of ordinary skill in the art may understand that the structure shown in Fig. 1 is only schematic, which does not limit the structure of the computer device. For example, the computer device may also include more or fewer components than shown in Fig. 1, or have a different configuration than that shown in Fig. 1.

The memory 104 may be configured to store a computer program, for example, a software program and a module of application software, such as a computer program corresponding to the antenna panel indication method in the embodiment of the present disclosure. The processor 102 runs the computer program stored in the memory 104, so as to execute various function applications and board matching, that is, to implement the foregoing method. Memory 104 may include high-speed random access memory, and may also include non-volatile memory, such as one or more magnetic storage devices, flash memory, or other non-volatile solid-state memory. In some examples, memory 104 can further include memory remotely located with respect to processor 102, which can be connected to computer devices over a network. Examples of such networks include, but are not limited to, the Internet, intranets, local area networks, mobile communication networks, and combinations thereof.

The transmitting device 106 is used to receive or transmit data via a network. Specific examples of the described network may include a wireless network provided by a communication provider of a computer device. In one example, the transfer device 106 may comprise a network interface controller (NIC) that may be coupled to other network devices via a base station to communicate with the Internet. In one example, the transmission device 106 may be a radio frequency (RF) module for communicating wirelessly with the Internet.

The embodiment provides an antenna panel indication method running on the computer device. Fig. 2 is a first flowchart of an antenna panel indication method according to an embodiment of the present disclosure. As shown in Fig. 2, the flow comprises the following steps:
Step S202, receiving antenna panel indication information sent by a terminal;
Step S204: determining correspondence between the terminal signal transmission and the antenna panel according to the antenna panel indication information.

By means of the described steps S202 to S204, the problem in the related art of how to realize the simultaneous transmission of signals of a plurality of antenna panels can be solved, a base station determines a correlation between terminal signal transmission and an antenna panel by receiving antenna panel indication information reported by a terminal, the base station thus knows when and which signals or channels can be scheduled for the terminals to transmit simultaneously on multiple antenna panels, in this way, signal transmission may be scheduled concurrently for the terminals on the plurality of antenna panels.

In this embodiment, the step S202 may specifically include at least one of the following:
S2021, receiving antenna panel indication information reported by a terminal;
S2022, receiving an uplink measurement signal sent by a terminal, wherein the uplink measurement signal carries the antenna panel indication information.

In an embodiment, the S201 may specifically include: receiving the antenna panel indication information reported by the terminal through uplink control information (UCI) or a medium access control element (MAC CE) or radio resource control (RRC) signaling.

In one embodiment, the antenna panel indication information comprises at least one of the following:
the terminal executing an antenna panel sequence pattern when receiving beam polling in mobility measurement;
the terminal executing a corresponding relationship between the number of received beams and an antenna panel when receiving beam polling in mobility measurement;
the terminal executing a correlation between an antenna panel and a received wave beam subset in mobility measurement;
the terminal executing a corresponding relationship between an antenna panel and a measurement opportunity in mobility measurement;
the terminal executing an antenna panel sequence pattern, which is the basis for receiving beam polling in mobility measurement;
the terminal executing an antenna panel sequence pattern during receiving beam polling in physical layer measurement;
the terminal executing a corresponding relationship between the number of received beams and an antenna panel when receiving beam polling in physical layer measurement;
the terminal executing a correlation between an antenna panel and a received wave beam subset in physical layer measurement;
the terminal executing an antenna panel sequence pattern, which is the basis for receiving beam polling in physical layer measurement ;
the terminal executing a corresponding relationship between an antenna panel and a measurement opportunity in physical layer measurement.

In an embodiment, an antenna panel sequence patterns used when receiving the beam polling are polling in an order of sequence numbers of the antenna panels from small to large, or polling in an order of sequence numbers of the antenna panels from large to small; a correlation between the number of received beams and antenna panels during the polling of the received beams comprises a correlation between each antenna panel and N received beams, where N is a positive integer greater than or equal to 1; the correlation between the antenna panel and the received beam subsets comprises a correlation between each antenna panel and the received beam subsets, wherein the received beam subsets corresponding to each antenna panel contain equal or unequal received beams; the correlation between the antenna panel and the measurement opportunity comprises a correlation between a measurement opportunity set and an antenna panel on which receiving beam polling is executed, wherein the measurement opportunity set contains one or more measurement opportunities.

In an embodiment, the measurement opportunity is determined by a reference signal configuration for measurement, and the measurement opportunity is a whole set or a subset of a transmission opportunity of a reference signal for measurement; and/or the measurement opportunities are in a measurement cycle, the measurement cycle containing all of said measurement opportunities.

In an embodiment, the mobility measurement described above is a mobility measurement configured based on at least one of: a predetermined reference signal type, a predetermined reference signal configuration, a predetermined measurement subject.

In an embodiment, the uplink measurement signal includes at least one of the following: a sounding reference signal sent by a terminal, where the sounding reference signal corresponds to an antenna panel; a sounding reference signal sent by a terminal or other uplink measurement signals, wherein the sounding reference signal or the other uplink measurement signals are used to indicate a corresponding antenna panel, through a signal per se or a signal sending feature.

In an embodiment, the step S2021 may specifically include: receiving an antenna panel number sent by a terminal, including at least one of the following: sending an antenna panel number for receiving the downlink measurement signal corresponding to the downlink measurement signal index to the base station while sending the downlink measurement signal index to the base station; sending an antenna panel number used to send the sounding reference signal or the other uplink measurement signal to the base station, wherein the other uplink measurement signal is an uplink measurement signal other than the sounding reference signal while the base station sends a sounding reference signal or another uplink measurement signal.

In an embodiment, the described signal sending feature comprises at least one of the following: a frequency domain resource for sending a signal, a time domain resource for sending a signal, a sequence for sending a signal, a space domain resource for sending a signal, and a port number for sending a signal.

In this embodiment, a correspondence exists between the antenna panel and a sounding reference signal (SRS) resource, wherein the correspondence between the antenna panel and the SRS resource is predefined by a system or semi-statically configured by the base station.

In one embodiment, an antenna panel corresponds to SRS resources of a group of SRS ports; and/or an antenna panel corresponds to an SRS resource on a predetermined time domain resource; and/or an antenna panel corresponds to an SRS resource on a predetermined frequency domain resource.

In this embodiment, the step S204 may specifically include:
S2041, determining correspondence between downlink receiving of the terminal and an antenna panel according to the antenna panel indication information;
S2042, determining the corresponding relationship between the uplink sending of the terminal and the antenna panel according to the antenna panel indication information.

In an embodiment, after the step S204, the method further comprises: scheduling the terminal to simultaneously use a plurality of antenna panels to transmit a plurality of signals according to correspondence between signal transmission of the terminal and the antenna panels. Further, scheduling the terminal to simultaneously receive a plurality of downlink signals by using the plurality of antenna panels according to the corresponding relationship between the downlink reception of the terminal and the antenna panel when the corresponding relationship between the terminal signal transmission and the antenna panel is the corresponding relationship between downlink reception of the terminal and the antenna panel; scheduling the terminal to simultaneously use the plurality of antenna panels to send the plurality of uplink signals according to the corresponding relationship between the terminal uplink sending and the antenna panel when the corresponding relationship between the terminal signal transmission and the antenna panel is the corresponding relationship between the terminal uplink sending and the antenna panel.

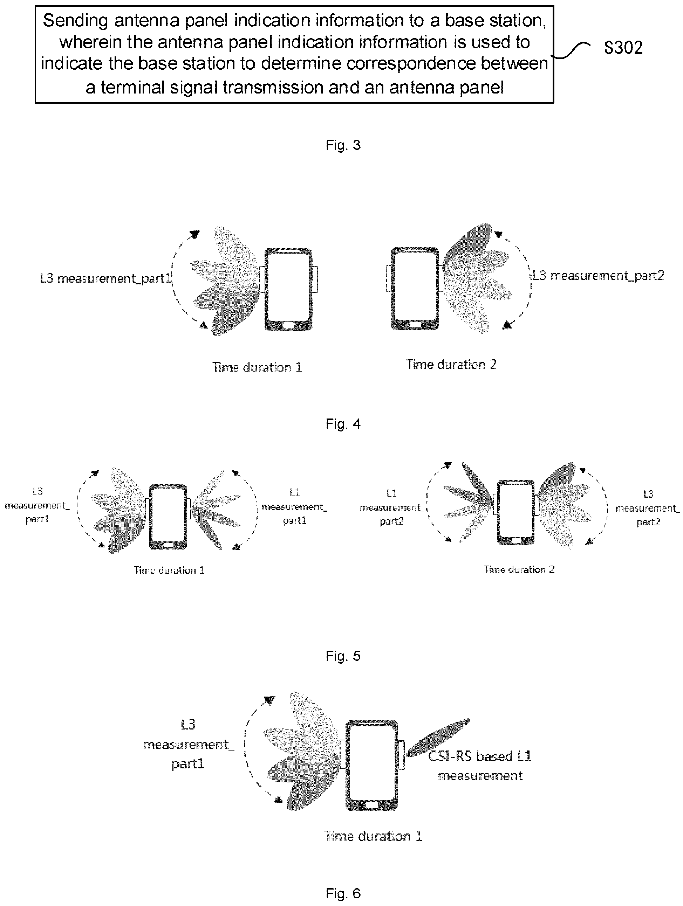

According to another aspect of the embodiments of the present disclosure, an antenna panel indication method is also provided, which is applied to a terminal. Fig. 3 is a second flowchart of an antenna panel indication method according to an embodiment of the present disclosure. As shown in Fig. 3, the flow comprises the following steps:
Step S302, sending antenna panel indication information to a base station, wherein the antenna panel indication information is used to indicate the base station to determine correspondence between a terminal signal transmission and an antenna panel.

By means of the described step S302, the problem in the related art of how to realize the simultaneous transmission of signals of a plurality of antenna panels can be solved, a base station determines a correlation between terminal signal transmission and an antenna panel by receiving antenna panel indication information reported by a terminal, the base station thus knows when and which signals or channels can be scheduled for the terminals to transmit simultaneously on multiple antenna panels, in this way, signals can be scheduled concurrently for the terminals on the plurality of antenna panels.

In this embodiment, the step S302 may specifically include at least one of:
S3021, reporting the antenna panel indication information to a base station;
S3022, sending an uplink measurement signal to the base station, where the uplink measurement signal carries the antenna panel indication information.

In an embodiment, the step S3021 may specifically report the antenna panel indication information to the base station through uplink control information UCI(), or a media access control element (MAC CE), or radio resource control (RRC) signaling.

In one embodiment, the antenna panel indication information includes at least one of the following:
the terminal executing an antenna panel sequence pattern when receiving beam polling in mobility measurement;
the terminal executing a corresponding relationship between the number of received beams and an antenna panel when receiving beam polling in mobility measurement;
the terminal executing a correlation between an antenna panel and a received wave beam subset in mobility measurement;
the terminal executing a corresponding relationship between an antenna panel and a measurement opportunity in mobility measurement;
the terminal executing an antenna panel sequence pattern, which is the basis for receiving beam polling in mobility measurement;
the terminal executing an antenna panel sequence pattern during receiving beam polling in physical layer measurement;
the terminal executing a corresponding relationship between the number of received beams and an antenna panel when receiving beam polling in physical layer measurement;
the terminal executing a correlation between an antenna panel and a received wave beam subset in physical layer measurement;
the terminal executing an antenna panel sequence pattern, which is the basis for receiving beam polling in physical layer measurement ;
the terminal executing a corresponding relationship between an antenna panel and a measurement opportunity in physical layer measurement.

In an embodiment, an antenna panel sequence patterns used when receiving the beam polling are polling in an order of sequence numbers of the antenna panels from small to large, or polling in an order of sequence numbers of the antenna panels from large to small; a correlation between the number of received beams and antenna panels during the polling of the received beams comprises a correlation between each antenna panel and N received beams, where N is a positive integer greater than or equal to 1; the correlation between the antenna panel and the received beam subsets comprises a correlation between each antenna panel and the received beam subsets, wherein the received beam subsets corresponding to each antenna panel contain equal or unequal received beams; the correlation between the antenna panel and the measurement opportunity comprises a correlation between a measurement opportunity set and an antenna panel on which receiving beam polling is executed, wherein the measurement opportunity set contains one or more measurement opportunities.

In an embodiment, the measurement opportunity is determined by a reference signal configuration for measurement, and the measurement opportunity is a whole set or a subset of transmission opportunities of the reference signal for measurement; and/or the measurement opportunities are in a measurement cycle, the measurement cycle containing all of said measurement opportunities.

In an embodiment, the mobility measurement described above is a mobility measurement configured based on at least one of: a predetermined reference signal type, a predetermined reference signal configuration, a predetermined measurement subject.

In an embodiment, the uplink measurement signal includes at least one of the following:
a sounding reference signal sent to a base station, wherein there is a correlation between the sounding reference signal and an antenna panel;
a sounding reference signal or another uplink measurement signal sent to a base station, wherein the sounding reference signal or the other uplink measurement signal is used to indicate a corresponding antenna panel, through a signal per se or a signal sending feature.

In another embodiment, the step S3021 may specifically include: sending the antenna panel number to a base station, including at least one of the following: sending an antenna panel number for receiving the downlink measurement signal corresponding to the downlink measurement signal index to the base station while sending the downlink measurement signal index to the base station; sending an antenna panel number used to send the sounding reference signal or the other uplink measurement signal to the base station, wherein the other uplink measurement signal is an uplink measurement signal other than the sounding reference signal while the base station sends a sounding reference signal or another uplink measurement signal.

In an embodiment, the described signal sending feature comprises at least one of the following: a frequency domain resource for sending a signal, a time domain resource for sending a signal, a sequence for sending a signal, a space domain resource for sending a signal, and a port number for sending a signal.

In an embodiment, a correspondence exists between the antenna panel and a sounding reference signal (SRS) resource, wherein the correspondence between the antenna panel and the SRS resource is predefined by a system or semi-statically configured by the base station.

Embodiments of the present disclosure will be described below with reference to specific embodiments.

In this embodiment, the terminal may receive the downlink signal simultaneously by using a plurality of antenna panels.

In the case that the terminal supports a plurality of antenna panels to receive signals simultaneously, there are the following a plurality of specific working modes:
Mode 1: physical layer measurement 1 is executed by the antenna panel 2 while the mobility measurement 1 is executed by the antenna panel 1;
Mode 2: while the antenna panel 1 is used to execute mobility measurement 1, the antenna panel 2 is used to receive physical channels such as a physical downlink control channel (PDCCH) or a physical downlink shared channel (PDSCH).
Mode 3: the mobility measurement 2 is executed by the antenna panel 2 while the mobility measurement 1 is executed by the antenna panel 1;
Mode 4: Physical layer measurement 2 is executed with antenna panel 2 while physical layer measurement 1 is executed with antenna panel 1.

In the described various modes, when a terminal uses a certain antenna panel to receive a physical channel, such as a PDCCH or a PDSCH, there is no need to execute receiving beam training, and a specific receiving beam can be used to receive the PDCCH or the PDSCH based on the antenna panel according to a previous training result and an indication of a base station for sending a beam to the PDCCH or the PDSCH.

In the described various modes, when the terminal executes mobility measurement based on the mobility object configuration, since there is no prior information or the prior information is too old, therefore, all or a plurality of antenna panels need to be used to sequentially execute receive beam training. Fig. 4 is a schematic diagram of a terminal executing receiving beam training by using a plurality of antenna panels in sequence according to an embodiment of the present invention, as shown in Fig. 4, the terminal first executes polling reception with four receiving beam directions in part 1 based on the left antenna panel, then, the terminal executes polling reception with four receiving beam directions in part 2 based on the antenna panel at the right side.

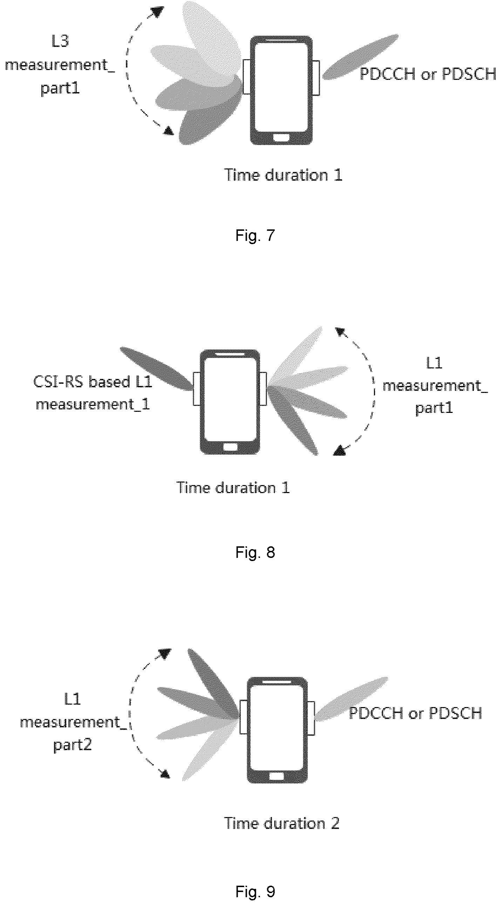

Fig. 5 is a schematic diagram of a terminal simultaneously executing training of an L3 measurement receiving beam and training of an L1 measurement receiving beam by using a plurality of antenna panels according to an embodiment, Fig. 6 is a schematic diagram of a terminal simultaneously executing L3 receive beam training and L1 measurement by using a plurality of antenna panels according to an embodiment of the present invention, Fig. 7 is a schematic diagram of a terminal simultaneously executing L3 measurement receive beam training and PDCCH/PDSCH reception with a plurality of antenna panels according to the present embodiment, as shown in Figs. 5, 6 and 7, when the terminal executes polling reception using four receiving beam directions in part 1 based on the left antenna panel, the terminal may receive other downlink channels or signals based on the antenna panel on the right, but it is required that the signals can only be within a beam direction range covered by the antenna panel on the right. Therefore, the terminal needs to report to the base station side the order in which the different antenna panels or different receiving beam directions are successively polled in the training of the receiving beam when executing mobility measurement on the terminal itself. Thus, the base station can send other channels or signals to the terminal while the terminal executes receiving beam training based on the antenna panel 1, and the other channels or signals are suitable for receiving based on the antenna panel 2, so that the terminal can receive signals based on a plurality of antenna panels simultaneously.

In the above modes, when the terminal executes the L1 measurement based on the RRC signaling configuration, there are three possible modes:
Method 1: L1 measurement is based on a synchronization signal and a PBCH block (SSB) or a channel state information reference signal (CSI-RS), and needs to sequentially use all antenna panels to execute receiving beam training;
Method 2: L1 measurement is based on an SSB or CSI-RS, but a terminal already has some prior information, and therefore only a single antenna panel needs to be used to execute receiving beam training;
Method 3: L1 measurement is based on a CSI-RS, a CSI-RS resource group has been configured, and a terminal does not need to execute receiving beam training, and it is good to directly use a specific beam to receive the CSI-RS.

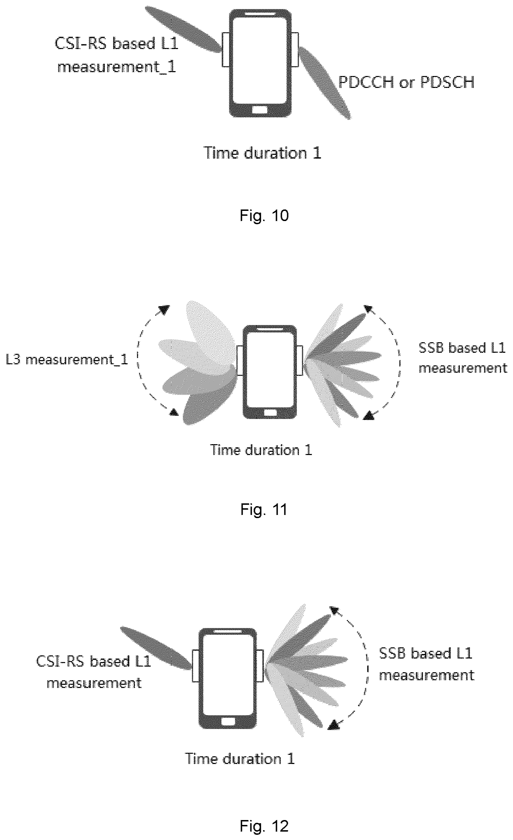

With regard to the L1 measurement mode 1, Fig. 8 is a schematic diagram of a terminal simultaneously executing L1 measurement receiving beam training and L1 measurement without beam training by using a plurality of antenna panels according to the present embodiment, figure 9 is a schematic diagram of a radar terminal simultaneously executing L1 measurement receive beam training and PDCCH/PDSCH reception with a plurality of antenna panels in accordance with the present invention, Fig. 10 is a schematic diagram of a terminal simultaneously executing L1 measurement and PDCCH/PDSCH reception with a plurality of antenna panels according to the present embodiment, based on what is shown in Figs. 8, 9 and 10, when the terminal polls the L1 measurement receiving beam based on the right antenna panel by using four receiving beam directions in part 1, the terminal may receive other downlink channels or signals based on the antenna panel on the left side, but it is required that the signals can only be within a beam direction range covered by the antenna panel on the right side. Therefore, the terminal needs to report to the base station side the order in which the different antenna panels or different receiving beam directions are successively polled in the training of the receiving beam when executing mobility measurement on the terminal itself. Thus, the base station can send other channels or signals to the terminal while the terminal executes receiving beam training based on the antenna panel 2, and the other channels or signals are suitable for receiving based on the antenna panel 1, so that the terminal can receive signals based on a plurality of antenna panels simultaneously.

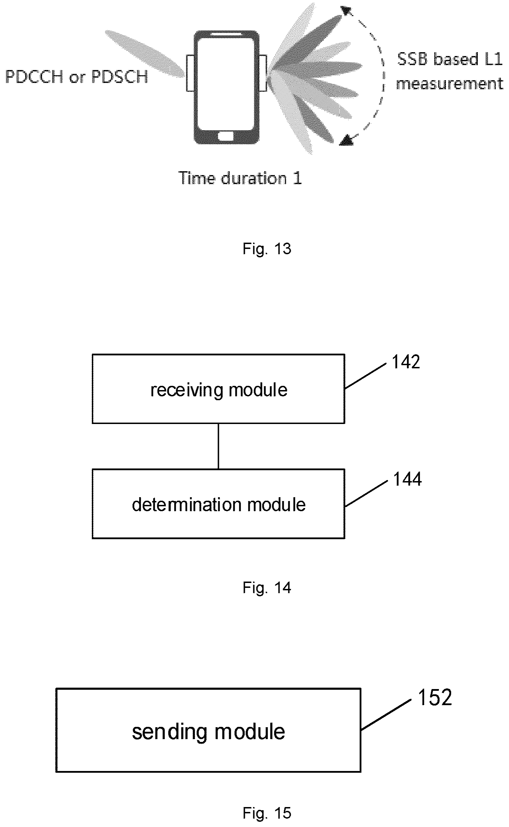

With regard to the L1 measurement mode 2, Fig. 11 is a schematic diagram of a terminal simultaneously executing L1 measurement receiving beam polling and L3 measurement receiving beam polling using a plurality of antenna panels according to the present embodiment, Fig. 12 is a schematic diagram of a terminal simultaneously executing L1 measurement with a plurality of antenna panels and receiving beam polling without receiving beam polling according to an embodiment, Fig. 13 is a diagram of a terminal simultaneously executing L1 measurement reception beam polling and PDCCH/PDSCH reception with a plurality of antenna panels according to the present embodiment, based on what is shown in figures 11, 12 and 13, while a terminal uses one antenna panel to execute L1 measurement receiving beam polling, measurement with receiving beam polling or measurement without receiving beam polling or PDCCH/PDSCH reception may be executed with another antenna panel. Therefore, the terminal needs to report to the base station which antenna panel needs to be used to poll different receiving beam directions in the training of the receiving beam when the terminal executes an L1 measurement on the terminal. Thus, the base station can send other channels or signals to the terminal while the terminal executes receiving beam training based on one antenna panel 1, and the other channels or signals are suitable for receiving based on the antenna panel 2, so that the terminal can receive signals based on a plurality of antenna panels simultaneously.

For the L1 measurement mode 3, while the terminal uses the antenna panel 1 to receive the L1 measurement signal, the antenna panel 2 may be used to execute the measurement with the received beam polling or the measurement without the received beam polling or the PDCCH/PDSCH reception. As shown in Figs. 6, 8, 10 and 12. Therefore, the terminal needs to report to the base station which antenna panel is required to receive the CSI-RS or other pilot signals when the terminal executes L1 measurement on the base station side. Thus, the base station may send other channels or signals to the terminal while the terminal executes L1 measurement based on the CSI-RS or other pilot signals received by the antenna panel 1, and the other channels or signals are suitable for being received based on the antenna panel 2, so that the terminal can simultaneously receive based on a plurality of antenna panels.

In order to realize the described various multi-antenna panel simultaneous receiving modes, with regard to the reporting of mobility measurement, a terminal reports at least one of the following information to a base station through UCI, or MAC CE or RRC signaling:
the terminal executing an antenna panel sequence pattern when receiving beam polling in mobility measurement.

Specifically, polling is executed in ascending order of the panel serial numbers, or in descending order of the panel serial numbers.

The terminal executing a corresponding relationship between the number of received beams and an antenna panel when receiving beam polling in mobility measurement.

Specifically, each panel corresponds to N receiving beams, where N is a positive integer greater than or equal to 1.

The terminal executing a correlation between an antenna panel and a received wave beam subset in mobility measurement.

Specifically, panel 1 corresponds to a receiving beam subset 1, which contains X receiving beams; panel 2 corresponds to a received beam subset 2, which contains Y received beams, etc. X and Y are both positive integers greater than or equal to 1, and may be equal or unequal.

Correspondence between panel and measurement opportunity in terminal executing mobility measurement

Specifically, the terminal reports to the base station that the terminal itself executes receiving beam polling on the measurement opportunity set 1 based on the panel 1, and the terminal itself executes receiving beam polling on the measurement opportunity set 2 based on the panel 2. The set of measurement opportunities includes one or more measurement opportunities. The measurement opportunity is determined by the configuration of the RSs for measurement, and may specifically be the whole set or a subset of the transmission opportunities of the RSs for measurement.

In particular, the measurement opportunity lies within the measurement period. The measurement period contains all of the measurement opportunities.

Terminal polling for received beam in mobility measurement based on which panel
Specifically, the terminal reports to the base station a received beam polling thereof for executing mobility measurement based on {panel 1}; or
Specifically, the terminal reports to the base station a received beam polling thereof for executing mobility measurement based on {panel 1, panel 2};
Specifically, the mobility measurement may be a mobility measurement based on a specific RS type and/or based on a specific RS configuration and/or based on a specific measurement object configuration.

The report for L1 measurement is exactly the same as the above report for mobility measurement.

The terminal executes an L1 measurement to receive the panel sequence pattern when the beam is polled.

Specifically, polling is executed in ascending order of the panel serial numbers, or in descending order of the panel serial numbers.

A corresponding relationship between the number of received wave beams and the panel when the terminal executes the polling of received wave beams in the L1 measurement.

Specifically, each panel corresponds to N receiving beams, where N is a positive integer greater than or equal to 1.

The terminal executes the corresponding relationship between the panel and the received beam subsets in the L1 measurement.

Specifically, panel 1 corresponds to a receiving beam subset 1, which contains X receiving beams; panel 2 corresponds to a received beam subset 2, which contains Y received beams, etc. X and Y are both positive integers greater than or equal to 1, and may be equal or unequal.

### Terminal executing receiving beam polling in L1 measurement based on which panel

Specifically, the terminal reports to the base station its own receiving beam polling for executing L1 measurement based on {panel 1}; or the terminal reports to the base station a received beam polling thereof for executing L1 measurement based on {panel 1, panel 2}; or the terminal reports to the base station that the terminal itself receives the RSs measured by the L1 in the same manner of receiving the downlink reference signal 1; or, the terminal reports to the base station that the terminal receives the RSs measured by the L1 in the same manner as receiving the downlink channel 1. The downlink reference signal 1 may be an SBS or a CSI-RS or a DMRS. The downlink channel 1 may be a PDCCH or a PDSCH.

Specifically, the same manner refers to using the same antenna panel to receive.

Specifically, the L1 measurements may be L1 measurements based on a specific RS type and/or based on a specific RS configuration.

Correspondence between panel and measurement opportunity when terminal executes L1 measurement

Specifically, the terminal reports to the base station that the terminal itself executes receiving beam polling on the measurement opportunity set 1 based on the panel 1, and the terminal itself executes receiving beam polling on the measurement opportunity set 2 based on the panel 2. The set of measurement opportunities includes one or more measurement opportunities. The measurement opportunity is determined by the configuration of the RSs for measurement, and may specifically be the whole set or a subset of the transmission opportunities of the RSs for measurement.

Specifically, the measurement opportunity lies within the measurement period. The measurement period contains all of the measurement opportunities.

In this embodiment, a terminal may simultaneously transmit an uplink signal by using a plurality of antenna panels.

When a terminal has the capability of simultaneously transmitting an uplink signal using a plurality of antenna panels, an uplink transmission beam direction of the terminal is scheduled and indicated by a base station; therefore, only when the base station learns a beam direction range that can be covered by each antenna panel of the terminal, the terminal can be well scheduled to simultaneously transmit a plurality of uplink signals using the plurality of antenna panels. Specifically, the base station learns a beam direction range that can be covered by each antenna panel of the terminal in at least one of the following manners.

Manner 1: A terminal feeds back an antenna panel serial number to a base station.

Specifically, while feeding back the reference signal index to the base station, the terminal additionally feeds back a sequence number of an antenna panel receiving the reference signal corresponding to the index. For example, when feeding back an SSB index or a CSI-RS index to the base station, the terminal also feeds back a sequence number of an antenna panel for receiving a corresponding reference signal. Thus, the base station can know the correspondence between the beam direction and the antenna panel according to the feedback information. In this case, when the scheduling terminal sends a plurality of uplink signals simultaneously, the base station schedules the terminal to send the plurality of uplink signals by using beam directions corresponding to different antenna panels.

Manner 2: an SRS signal sent by a terminal to a base station has a correspondence relationship with an antenna panel.

Specifically, a terminal sends multiple groups of SRS signals to a base station, wherein each group of SRS signals corresponds to an antenna panel, for example, the terminal uses the antenna panel 1 to send a first group of SRS signals, and the terminal uses the antenna panel 2 to send a second group of SRS signals. The base station learns the beam coverage corresponding to each antenna panel of the terminal by measuring multiple groups of SRS signals. In this case, when the scheduling terminal sends a plurality of uplink signals simultaneously, the base station schedules the terminal to send the plurality of uplink signals by using beam directions corresponding to different antenna panels.

Manner 3: the terminal sends an SRS signal or another uplink measurement signal to the base station, and the signal itself or the signal sends a feature to indicate an antenna panel corresponding thereto.

Specifically, the signal sending feature comprises at least one of the following: a frequency domain resource for sending a signal; time domain resources for sending signals; a sequence of transmitted signals; a space domain resource sending a signal; port number of the transmitted signal.

Specifically, one antenna panel corresponds to a group of SRS ports. For example, SRS port {0, 1} is sent on antenna panel 1, and SRS port {2, 3} is sent on antenna panel 2. By measuring a plurality of SRS ports, the base station learns the beam coverage range corresponding to each antenna panel of the terminal. In this case, when the scheduling terminal sends a plurality of uplink signals simultaneously, the base station schedules the terminal to send the plurality of uplink signals by using beam directions corresponding to different antenna panels.

Specifically, one antenna panel corresponds to SRS transmission on a specific time domain resource. For example, antenna panel 1 transmits SRS on time unit set 1, and antenna panel 2 transmits SRS on time unit set 2. By measuring SRS on different time units, the base station learns the coverage areas of beams corresponding to the antenna panels of the terminal. In this case, when the scheduling terminal sends a plurality of uplink signals simultaneously, the base station schedules the terminal to send the plurality of uplink signals by using beam directions corresponding to different antenna panels. The time unit may be a radio frame, a half-frame, a subframe, a slot, a symbol level, or a symbol.

Specifically, one antenna panel corresponds to SRS transmission on a specific frequency domain resource. For example, the antenna panel 1 transmits SRS on the frequency unit set 1, and the antenna panel 2 transmits SRS on the frequency unit set 2. By measuring SRS on different frequency units, the base station learns beam coverage scopes corresponding to the tenna panels of the terminal. In this case, when the scheduling terminal sends a plurality of uplink signals simultaneously, the base station schedules the terminal to send the plurality of uplink signals by using beam directions corresponding to different antenna panels. The frequency unit may be a RBG, a PRB, or an RE.

According to another aspect of the embodiments of the present disclosure, an antenna panel indication apparatus is also provided, which is applied to a base station. Fig. 14 is a first block diagram of the antenna panel indication apparatus according to the embodiments of the present disclosure, and as shown in Fig. 14, the apparatus comprises:
a receiving module 142, configured to receive antenna panel indication information sent by a terminal;
the determination module 144 , configured to determine correspondence between terminal signal transmission and the antenna panel according to the antenna panel indication information.

In an embodiment, the receiving module 142 includes at least one of the following:
a first receiving sub-module, configured to receive antenna panel indication information reported by the terminal;
a second receiving sub-module, configured to receive an uplink measurement signal sent by the terminal, wherein the uplink measurement signal carries the antenna panel indication information.

In one embodiment, the first receiving sub-module is further configured to receive the antenna panel indication information reported by the terminal through uplink control information (UCI), or a medium access control element (MAC CE) or radio resource control (RRC) signaling.

In one embodiment, the antenna panel indication information comprises at least one of the following:
the terminal executing an antenna panel sequence pattern when receiving beam polling in mobility measurement;
the terminal executing a corresponding relationship between the number of received beams and an antenna panel when receiving beam polling in mobility measurement;
the terminal executing a correlation between an antenna panel and a received wave beam subset in mobility measurement;
the terminal executing a corresponding relationship between an antenna panel and a measurement opportunity in mobility measurement;
the terminal executing an antenna panel sequence pattern, which is the basis for receiving beam polling in mobility measurement;
the terminal executing an antenna panel sequence pattern during receiving beam polling in physical layer measurement;
the terminal executing a corresponding relationship between the number of received beams and an antenna panel when receiving beam polling in physical layer measurement;
the terminal executing a correlation between an antenna panel and a received wave beam subset in physical layer measurement;
the terminal executing an antenna panel sequence pattern, which is the basis for receiving beam polling in physical layer measurement ;
the terminal executing a corresponding relationship between an antenna panel and a measurement opportunity in physical layer measurement.

In an embodiment, an antenna panel sequence patterns used when receiving the beam polling are polling in an order of sequence numbers of the antenna panels from small to large, or polling in an order of sequence numbers of the antenna panels from large to small; a correlation between the number of received beams and antenna panels during the polling of the received beams comprises a correlation between each antenna panel and N received beams, where N is a positive integer greater than or equal to 1; the correlation between the antenna panel and the received beam subsets comprises a correlation between each antenna panel and the received beam subsets, wherein the received beam subsets corresponding to each antenna panel contain equal or unequal received beams; the correlation between the antenna panel and the measurement opportunity comprises a correlation between a measurement opportunity set and an antenna panel on which receiving beam polling is executed, wherein the measurement opportunity set contains one or more measurement opportunities.

In an embodiment, the measurement opportunity is determined by the reference signal configuration for measurement, the measurement opportunity being a whole set or a subset of transmission opportunities of the reference signal for measurement; and/or
the measurement opportunities are within the measurement period, the measurement period containing all of the measurement opportunities.

In an embodiment, the mobility measurement is a mobility measurement configured on the basis of at least one of: a predetermined reference signal type, a predetermined reference signal configuration, a predetermined measurement subject.

In an embodiment, the uplink measurement signal includes at least one of the following:
a sounding reference signal sent by the terminal, wherein there is a correlation between the sounding reference signal and an antenna panel;
a sounding reference signal or another uplink measurement signal sent by the terminal, wherein the sounding reference signal or the other uplink measurement signal is used to indicate a corresponding antenna panel, through a signal per se or a signal sending feature.

In an embodiment, the first receiving sub-module is further configured to receive the serial number of the antenna panel sent by the terminal, and the serial number includes at least one of the following:
send an antenna panel number for receiving the downlink measurement signal corresponding to the downlink measurement signal index to the base station while sending the downlink measurement signal index to the base station;
send an antenna panel number used to send the sounding reference signal or the other uplink measurement signal to the base station, wherein the other uplink measurement signal is an uplink measurement signal other than the sounding reference signal while the base station sends a sounding reference signal or another uplink measurement signal.

In an embodiment, the signal sending feature include at least one of the following: a frequency domain resource for sending a signal, a time domain resource for sending a signal, a sequence for sending a signal, a space domain resource for sending a signal, and a port number for sending a signal.

In an embodiment, a correspondence exists between the antenna panel and a sounding reference signal (SRS) resource, wherein the correspondence between the antenna panel and the SRS resource is predefined by a system or semi-statically configured by the base station.

In one embodiment, an antenna panel corresponds to SRS resources of a group of SRS ports; and/or an antenna panel corresponds to an SRS resource on a predetermined time domain resource; and/or an antenna panel corresponds to an SRS resource on a predetermined frequency domain resource.

In an embodiment, the determination module 144 is further configured to determine correspondence between downlink receiving of the terminal and an antenna panel according to the antenna panel indication information; determine the corresponding relationship between the uplink sending of the terminal and the antenna panel according to the antenna panel indication information.

In an embodiment, the apparatus further comprises:
a scheduling module, configured to schedule the terminal to simultaneously use a plurality of antenna panels to transmit a plurality of signals according to correspondence between signal transmission of the terminal and an antenna panel.

In one embodiment, the scheduling module is further configured to schedule the terminal to simultaneously receive a plurality of downlink signals by using the plurality of antenna panels according to the corresponding relationship between the downlink reception of the terminal and the antenna panel when the corresponding relationship between the terminal signal transmission and the antenna panel is the corresponding relationship between downlink reception of the terminal and the antenna panel; schedule the terminal to simultaneously use the plurality of antenna panels to send the plurality of uplink signals according to the corresponding relationship between the terminal uplink sending and the antenna panel when the corresponding relationship between the terminal signal transmission and the antenna panel is the corresponding relationship between the terminal uplink sending and the antenna panel.

According to another aspect of the embodiments of the present disclosure, an antenna panel indication apparatus is also provided, which is applied to a terminal. Fig. 15 is a second block diagram of the antenna panel indication apparatus according to the embodiments of the present disclosure. As shown in Fig. 15, the apparatus comprises:
a sending module 152, configured to send antenna panel indication information to a base station, wherein the antenna panel indication information is used for instructing the base station to determine correspondence between a terminal signal transmission and an antenna panel.

In an embodiment, the sending module 152 includes at least one of the following:
a reporting sub-module, configured to report the antenna panel indication information to the base station;
A sending submodule, configured to send an uplink measurement signal to the base station, wherein the uplink measurement signal carries the antenna panel indication information.

In an embodiment, the reporting submodule is further configured to report the antenna panel indication information to the base station through uplink control information (UCI), or a media access control control element (MAC CE) or radio resource control RRC signaling.

In one embodiment, the antenna panel indication information comprises at least one of the following:
the terminal executing an antenna panel sequence pattern when receiving beam polling in mobility measurement;
the terminal executing a corresponding relationship between the number of received beams and an antenna panel when receiving beam polling in mobility measurement;
the terminal executing a correlation between an antenna panel and a received wave beam subset in mobility measurement;
the terminal executing a corresponding relationship between an antenna panel and a measurement opportunity in mobility measurement;
the terminal executing an antenna panel sequence pattern, which is the basis for receiving beam polling in mobility measurement;
the terminal executing an antenna panel sequence pattern during receiving beam polling in physical layer measurement;
the terminal executing a corresponding relationship between the number of received beams and an antenna panel when receiving beam polling in physical layer measurement;
the terminal executing a correlation between an antenna panel and a received wave beam subset in physical layer measurement;
the terminal executing an antenna panel sequence pattern, which is the basis for receiving beam polling in physical layer measurement ;
the terminal executing a corresponding relationship between an antenna panel and a measurement opportunity in physical layer measurement.

In an embodiment, an antenna panel sequence patterns used when receiving the beam polling are polling in an order of sequence numbers of the antenna panels from small to large, or polling in an order of sequence numbers of the antenna panels from large to small;
a correlation between the number of received beams and antenna panels during the polling of the received beams comprises a correlation between each antenna panel and N received beams, where N is a positive integer greater than or equal to 1;
the correlation between the antenna panel and the received beam subsets comprises a correlation between each antenna panel and the received beam subsets, wherein the received beam subsets corresponding to each antenna panel contain equal or unequal received beams;
the correlation between the antenna panel and the measurement opportunity comprises a correlation between a measurement opportunity set and an antenna panel on which receiving beam polling is executed, wherein the measurement opportunity set contains one or more measurement opportunities.

In an embodiment, the measurement opportunity is determined by the reference signal configuration for measurement, the measurement opportunity being a whole set or a subset of transmission opportunities of the reference signal for measurement; and/or the measurement opportunities are within the measurement period, the measurement period containing all of the measurement opportunities.

In an embodiment, the mobility measurement is a mobility measurement configured on the basis of at least one of the following: a predetermined reference signal type, a predetermined reference signal configuration, a predetermined measurement subject.

In an embodiment, the uplink measurement signal includes at least one of the following:
a sounding reference signal sent to the base station, wherein there is a correlation between the sounding reference signal and an antenna panel;
a sounding reference signal or another uplink measurement signal sent to the base station, wherein the sounding reference signal or the other uplink measurement signal is used to indicate a corresponding antenna panel, through a signal per se or a signal sending feature.

In one embodiment, the reporting submodule is further configured to send the serial number of the antenna panel to the base station, which comprises at least one of the following:
send an antenna panel number for receiving the downlink measurement signal corresponding to the downlink measurement signal index to the base station while sending the downlink measurement signal index to the base station;
send an antenna panel number used to send the sounding reference signal or the other uplink measurement signal to the base station, wherein the other uplink measurement signal is an uplink measurement signal other than the sounding reference signal while the base station sends a sounding reference signal or another uplink measurement signal.

In an embodiment, the signal sending feature include at least one of the following: frequency domain resources for transmitting signals, time domain resources for transmitting signals, sequences for transmitting signals, space domain resources for transmitting signals, port numbers for transmitting signals.

In an embodiment, a correspondence exists between the antenna panel and a sounding reference signal (SRS) resource, wherein the correspondence between the antenna panel and the SRS resource is predefined by a system or semi-statically configured by the base station.

In one embodiment, an antenna panel corresponds to SRS resources of a group of SRS ports; and/or an antenna panel corresponds to an SRS resource on a predetermined time domain resource; and/or an antenna panel corresponds to an SRS resource on a predetermined frequency domain resource.

Embodiments of the present disclosure also provide a computer readable storage medium. The computer readable storage medium stores a computer program, wherein the computer program is configured to execute the steps in any one of the described method embodiments during running.

In an exemplary embodiment, the computer readable storage medium may include, but is not limited to, any medium that can store a computer program, such as a USB flash drive, a read-only memory (Read-Only Memory, ROM for short), a random access memory (Random Access Memory, RAM for short), a removable hard disk, a magnetic disk, or an optical disc.

Embodiments of the present disclosure further provide an electronic apparatus, comprising a memory and a processor. The memory stores a computer program. The processor is configured to run the computer program to execute steps in any one of the method embodiments.

In an exemplary embodiment, the electronic apparatus can further comprise a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those skilled in the art should understand that each module or each step of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

## Claims

1. An antenna panel indication method, applied to a base station, the method comprises:
receiving antenna panel indication information sent by a terminal;
determining correspondence between the terminal signal transmission and the antenna panel according to the antenna panel indication information.

2. The method according to claim 1, wherein receiving antenna panel indication information sent by a terminal comprises at least one of the following:
receiving antenna panel indication information reported by the terminal;
receiving an uplink measurement signal sent by the terminal, wherein the uplink measurement signal carries the antenna panel indication information.

3. The method according to claim 2, wherein receiving antenna panel indication information reported by the terminal comprises:
receiving the antenna panel indication information reported by the terminal through uplink control information, UCI, or a media access control control element, MAC CE, or radio resource control, RRC, signaling.

4. The method according to claim 2, wherein the antenna panel indication information comprises at least one of the following:
the terminal executing an antenna panel sequence pattern when receiving beam polling in mobility measurement;
the terminal executing a corresponding relationship between the number of received beams and an antenna panel when receiving beam polling in mobility measurement;
the terminal executing a correlation between an antenna panel and a received wave beam subset in mobility measurement;
the terminal executing a corresponding relationship between an antenna panel and a measurement opportunity in mobility measurement;
the terminal executing an antenna panel sequence pattern, which is the basis for receiving beam polling in mobility measurement;
the terminal executing an antenna panel sequence pattern during receiving beam polling in physical layer measurement;
the terminal executing a corresponding relationship between the number of received beams and an antenna panel when receiving beam polling in physical layer measurement;
the terminal executing a correlation between an antenna panel and a received wave beam subset in physical layer measurement;
the terminal executing an antenna panel sequence pattern, which is the basis for receiving beam polling in physical layer measurement ;
the terminal executing a corresponding relationship between an antenna panel and a measurement opportunity in physical layer measurement.

5. The method according to claim 4, wherein,
an antenna panel sequence patterns used when receiving the beam polling are polling in an order of sequence numbers of the antenna panels from small to large, or polling in an order of sequence numbers of the antenna panels from large to small;
a correlation between the number of received beams and antenna panels during the polling of the received beams comprises a correlation between each antenna panel and N received beams, where N is a positive integer greater than or equal to 1;
the correlation between the antenna panel and the received beam subsets comprises a correlation between each antenna panel and the received beam subsets, wherein the received beam subsets corresponding to each antenna panel contain equal or unequal received beams;
the correlation between the antenna panel and the measurement opportunity comprises a correlation between a measurement opportunity set and an antenna panel on which receiving beam polling is executed, wherein the measurement opportunity set contains one or more measurement opportunities.

6. The method according to claim 5, wherein,
the measurement opportunity is determined by the reference signal configuration for measurement, and the measurement opportunity is a whole set or a subset of transmission opportunities of the reference signal for measurement; and/or
the measurement opportunities are within the measurement period, the measurement period containing all of the measurement opportunities.

7. The method according to claim 4, wherein,
the mobility measurement is a mobility measurement configured based on at least one of the following: a predetermined reference signal type, a predetermined reference signal configuration, a predetermined measurement subject.

8. The method according to claim 2, wherein the uplink measurement signal comprises at least one of the following:
a sounding reference signal sent by the terminal, wherein a correlation exists between the sounding reference signal and an antenna panel;
a sounding reference signal or another uplink measurement signal sent by the terminal, wherein the sounding reference signal or the other uplink measurement signal is used to indicate a corresponding antenna panel, through a signal per se or a signal sending feature.

9. The method according to claim 2, wherein receiving the antenna panel indication information reported by the terminal comprises:
receiving an antenna panel serial number sent by the terminal, comprising at least one of the following:
sending an antenna panel number for receiving the downlink measurement signal corresponding to the downlink measurement signal index to the base station while sending the downlink measurement signal index to the base station;
sending an antenna panel number used to send the sounding reference signal or the other uplink measurement signal to the base station, wherein the other uplink measurement signal is an uplink measurement signal other than the sounding reference signal while the base station sends a sounding reference signal or another uplink measurement signal.

10. The method according to claim 8, wherein the signal sending feature comprises at least one of the following: a frequency domain resource for sending a signal, a time domain resource for sending a signal, a sequence for sending a signal, a space domain resource for sending a signal, and a port number for sending a signal.

11. The method according to claim 8, wherein,
a correspondence exists between the antenna panel and a sounding reference signal, SRS, resource, wherein the correspondence between the antenna panel and the SRS resource is predefined by a system or semi-statically configured by the base station.

12. The method according to claim 11, wherein,
an antenna panel corresponds to SRS resources of a group of SRS ports; and/or an antenna panel corresponds to an SRS resource on a predetermined time domain resource; and/or
an antenna panel corresponds to an SRS resource on a predetermined frequency domain resource.

13. The method according to any one of claims 1 to 12, wherein the determining correspondence between the terminal signal transmission and the antenna panel according to the antenna panel indication information comprises:
determining correspondence between downlink receiving of the terminal and an antenna panel according to the antenna panel indication information;
determining the corresponding relationship between the uplink sending of the terminal and the antenna panel according to the antenna panel indication information.

14. The method according to any one of claims 1 to 12, wherein after determining correspondence between the terminal signal transmission and the antenna panel according to the antenna panel indication information, the method further comprises:
scheduling the terminal to simultaneously use a plurality of antenna panels to transmit a plurality of signals according to correspondence between signal transmission of the terminal and the antenna panels.

15. The method according to claim 14, wherein the scheduling the terminal to simultaneously use a plurality of antenna panels to transmit a plurality of signals according to correspondence between signal transmission of the terminal and the antenna panels comprises:
scheduling the terminal to simultaneously receive a plurality of downlink signals by using the plurality of antenna panels according to the corresponding relationship between the downlink reception of the terminal and the antenna panel when the corresponding relationship between the terminal signal transmission and the antenna panel is the corresponding relationship between downlink reception of the terminal and the antenna panel;
scheduling the terminal to simultaneously use the plurality of antenna panels to send the plurality of uplink signals according to the corresponding relationship between the terminal uplink sending and the antenna panel when the corresponding relationship between the terminal signal transmission and the antenna panel is the corresponding relationship between the terminal uplink sending and the antenna panel.

16. An antenna panel indication method, applied to a terminal, the method comprises:
sending antenna panel indication information to a base station, wherein the antenna panel indication information is used to indicate the base station to determine correspondence between a terminal signal transmission and an antenna panel.

17. The method according to claim 16, wherein sending antenna panel indication information to a base station comprises at least one of the following:
reporting the antenna panel indication information to the base station;
sending an uplink measurement signal to the base station, wherein the uplink measurement signal carries the antenna panel indication information.

18. The method according to claim 17, wherein the reporting the antenna panel indication information to the base station comprises:
reporting the antenna panel indication information to the base station through uplink control information, UCI, or a media access control control element, MAC CE, or radio resource control, RRC, signaling.

19. The method according to claim 17, wherein the antenna panel indication information comprises at least one of the following:
the terminal executing an antenna panel sequence pattern when receiving beam polling in mobility measurement;
the terminal executing a corresponding relationship between the number of received beams and an antenna panel when receiving beam polling in mobility measurement;
the terminal executing a correlation between an antenna panel and a received wave beam subset in mobility measurement;
the terminal executing a corresponding relationship between an antenna panel and a measurement opportunity in mobility measurement;
the terminal executing an antenna panel sequence pattern, which is the basis for receiving beam polling in mobility measurement;
the terminal executing an antenna panel sequence pattern during receiving beam polling in physical layer measurement;
the terminal executing a corresponding relationship between the number of received beams and an antenna panel when receiving beam polling in physical layer measurement;
the terminal executing a correlation between an antenna panel and a received wave beam subset in physical layer measurement;
the terminal executing an antenna panel sequence pattern, which is the basis for receiving beam polling in physical layer measurement ;
the terminal executing a corresponding relationship between an antenna panel and a measurement opportunity in physical layer measurement.

20. The method according to claim 19, wherein,
an antenna panel sequence patterns used when receiving the beam polling are polling in an order of sequence numbers of the antenna panels from small to large, or polling in an order of sequence numbers of the antenna panels from large to small;
a correlation between the number of received beams and antenna panels during the polling of the received beams comprises a correlation between each antenna panel and N received beams, where N is a positive integer greater than or equal to 1;
the correlation between the antenna panel and the received beam subsets comprises a correlation between each antenna panel and the received beam subsets, wherein the received beam subsets corresponding to each antenna panel contain equal or unequal received beams;
the correlation between the antenna panel and the measurement opportunity comprises a correlation between a measurement opportunity set and an antenna panel on which receiving beam polling is executed, wherein the measurement opportunity set contains one or more measurement opportunities.

21. The method according to claim 20, wherein,
the measurement opportunity is determined by the reference signal configuration for measurement, and the measurement opportunity is a whole set or a subset of transmission opportunities of the reference signal for measurement; and/or
the measurement opportunities are within the measurement period, the measurement period containing all of the measurement opportunities.

22. The method according to claim 19, wherein,
the mobility measurement is a mobility measurement configured based on at least one of: a predetermined reference signal type, a predetermined reference signal configuration, a predetermined measurement subject.

23. The method according to claim 17, wherein the uplink measurement signal comprises at least one of the following:
a sounding reference signal sent to the base station, wherein there is a correlation between the sounding reference signal and an antenna panel;
a sounding reference signal or another uplink measurement signal sent to the base station, wherein the sounding reference signal or the other uplink measurement signal is used to indicate a corresponding antenna panel, through a signal per se or a signal sending feature.

24. The method according to claim 17, wherein the reporting the antenna panel indication information to the base station comprises:
sending the serial number of the antenna panel to the base station, comprising at least one of the following:
sending an antenna panel number for receiving the downlink measurement signal corresponding to the downlink measurement signal index to the base station while sending the downlink measurement signal index to the base station;
sending an antenna panel number used to send the sounding reference signal or the other uplink measurement signal to the base station, wherein the other uplink measurement signal is an uplink measurement signal other than the sounding reference signal while the base station sends a sounding reference signal or another uplink measurement signal.

25. The method according to claim 23, wherein the signal sending feature comprises at least one of the following: a frequency domain resource for sending a signal, a time domain resource for sending a signal, a sequence for sending a signal, a space domain resource for sending a signal, and a port number for sending a signal.

26. The method according to claim 23, wherein,
a correspondence exists between the antenna panel and a sounding reference signal, SRS, resource, wherein the correspondence between the antenna panel and the SRS resource is predefined by a system or semi-statically configured by the base station.

27. The method according to claim 26, wherein,
an antenna panel corresponds to SRS resources of a group of SRS ports; and/or
an antenna panel corresponds to an SRS resource on a predetermined time domain resource; and/or
an antenna panel corresponds to an SRS resource on a predetermined frequency domain resource.

28. An antenna panel indication apparatus, applied to a base station, the apparatus comprising:
a receiving module, configured to receive antenna panel indication information sent by a terminal;
a determination module, configured to determine correspondence between terminal signal transmission and an antenna panel according to the antenna panel indication information.

29. An antenna panel indication apparatus, applied to a terminal, the apparatus comprising:
a sending module, configured to send antenna panel indication information to a base station, wherein the antenna panel indication information is used for instructing the base station to determine a correspondence between a terminal signal transmission and an antenna panel.

30. A computer readable storage medium, wherein the storage medium stores a computer program, and the computer program is configured to execute the method according to any one of claims 1 to 15, or any one of claims 16 to 27 when running.

31. An electronic device, comprising a memory and a processor, wherein the memory stores a computer program, and the processor is configured to run the computer program to execute the method as claimed in any one of claims 1 to 15 and 16 to 27.
